# FASCICULE DE BREVET EUROPEEN

(11) **EP 4 260 770 B1**
(45) Date de publication et mention de la délivrance du brevet: **02.10.2024**
(21) Numéro de dépôt: 23166375.8
(22) Date de dépôt: 03.04.2023
(51) Int. Cl.: A47J 36/32

(54) **ENSEMBLE COMPRENANT UN APPAREIL DE CUISSON ÉLECTRIQUE PAR CONTACT AVEC AU MOINS UNE PLAQUE DE CUISSON ET UN DISPOSITIF D'ALERTE À DISTANCE**
ANORDNUNG MIT EINEM ELEKTRISCHEN KOCHGERÄT DURCH KONTAKT MIT MINDESTENS EINEM KOCHFELD UND EINER FERNALARMVORRICHTUNG
ASSEMBLY COMPRISING AN ELECTRIC COOKING APPLIANCE BY CONTACT WITH AT LEAST ONE COOKING HOB AND A REMOTE WARNING DEVICE

(30) Priorité: 13.04.2022 FR 2203395
(43) Date de publication de la demande: 18.10.2023
(73) Titulaire: SEB S.A., 69130 Ecully (FR)
(72) Inventeur: FORNECKER, Florent, 69134 Ecully Cedex (FR)
(74) Mandataire: Germain Maureau

(56) Documents cités:
- US-A1- 2014 345 474
- US-A1- 2015 312 964
- US-A1- 2019 121 650

## Description

L'invention concerne le domaine des appareils de cuisson électriques par contact avec au moins une plaque de cuisson et plus particulièrement un système de cuisson et un procédé de cuisson. Un aliment désigne une substance comestible qui est caractérisée par son type. Le type de l'aliment regroupe notamment sa constitution et sa préparation pour un utilisateur, comme par exemple une entrecôte de boeuf, un steak de boeuf, une saucisse.

L'aliment est également caractérisé par une caractéristique physique regroupant une géométrie et un poids. Plus précisément, la géométrie d'un aliment correspond à sa forme, et peut se caractériser par ses dimensions notamment : longueur, largeur, épaisseur, superficie ou diamètre.

L'aliment peut aussi être caractérisé par son état initial qui peut être frais ou surgelé.

L'aliment peut également être cuit à différents niveaux de cuisson, c'est-à-dire présenter différent états de cuisson à coeur. Dans la présente description, la cuisson consiste en un chauffage actif de l'aliment pendant une durée de cuisson déterminée. Le niveau de cuisson, par exemple pour la viande rouge, va de peu cuit, c'est-à-dire saignant, à bien cuit en passant par une cuisson à point. L'aliment peut également être caractérisé par son aspect final, en particulier par son niveau de marquage. Le niveau de marquage correspond à un état de surface de l'aliment après cuisson. Le niveau de marquage renforce la perception organoleptique que l'utilisateur a de l'aliment en fin de cuisson en associant le goût et l'odeur de l'aliment à son aspect visuel. Le marquage de l'aliment est considéré comme étant très important lorsque l'aliment est très grillé, et faible lorsque l'aliment est faiblement grillé.

Un appareil de cuisson électrique par contact avec au moins une plaque de cuisson comprend au moins une plaque de cuisson sur laquelle un aliment est positionné afin d'être activement chauffé et donc cuit. L'appareil de cuisson est alimenté par une source électrique. Le document US 2015/312964 décrit un appareil de cuisson avec une plaque de cuisson.

La cuisson d'un aliment sur l'appareil de cuisson, tel qu'un barbecue électrique, une plancha, ou encore un grill viande avec un mode barbecue, nécessite une mise en oeuvre de plusieurs étapes, comme : préchauffer la plaque de cuisson à une température déterminée de préchauffage, déposer l'aliment sur l'au moins une plaque de cuisson de sorte à mettre en contact une première face de l'aliment avec la plaque de cuisson, attendre la cuisson de la première face avant de retourner l'aliment de sorte à mettre une deuxième face de l'aliment en contact avec la plaque de cuisson, attendre la cuisson de la deuxième face de l'aliment et enfin retirer l'aliment cuit pour éviter une surcuisson due à l'inertie thermique de la plaque de cuisson.

L'utilisateur d'un appareil de cuisson électrique désireux de consommer un aliment suivant un niveau de cuisson souhaité devra surveiller et estimer chacune de ces étapes, notamment les durées de cuisson de chacune des deux faces de l'aliment et donc le moment de retournement de l'aliment sur la plaque de cuisson.

Dans bien des cas, l'utilisateur n'aura que son expérience et son savoir-faire pour déterminer le moment de retournement de l'aliment en vue d'obtenir un niveau de cuisson souhaité.

Il existe des appareils de cuisson électriques par contact comprenant au moins une plaque de cuisson qui communique avec une application pour téléphone mobile. L'application permet à l'utilisateur de suivre le niveau de cuisson de l'aliment.

Il est également connu de disposer d'appareils de cuisson équipés de sonde connectés. L'utilisateur insère la sonde dans l'aliment et lorsque la température à coeur de l'aliment atteint un niveau de cuisson déterminé, autrement dit une température déterminé alors une notification est envoyée à destination de l'utilisateur, notamment par le biais d'une application mobile.

Il existe également des sondes autonomes connectées à une application d'un téléphone mobile intelligent qui permettent de notifier à l'utilisateur les températures à coeur de l'aliment.

L'inconvénient posé par ces appareils de cuisson et ces sondes connectées est de nécessiter l'utilisation d'un téléphone mobile intelligent en plus de l'appareil de cuisson lui-même, ce qui peut représenter un coût important pour l'utilisateur. Par ailleurs un téléphone mobile intelligent nécessite l'installation d'une application mobile et un paramétrage du smartphone pour lui permettre de communiquer avec l'appareil de cuisson. Les coûts de développement de l'application, ou du module de connectivité, ainsi que les problématiques de sécurité ou de perte de connexion notamment sur les produits extérieurs sont également un frein à cette solution. Enfin, d'autres usages du téléphone mobile intelligent peuvent être employés en même temps que des alertes reçues et celles-ci peuvent passer inaperçues. La communication entre l'appareil de cuisson et le téléphone mobile intelligent peut également être interrompu.

L'invention a pour but de remédier à tout ou partie des inconvénients précités en proposant, un système de cuisson d'un aliment comprenant un appareil de cuisson électrique par contact avec au moins une plaque de cuisson, et au moins un dispositif d'alerte à distance, ledit dispositif d'alerte comprenant une batterie, un microcontrôleur muni d'une horloge, un élément d'alerte configuré pour émettre au moins un signal sur une action à réaliser par un utilisateur sur l'appareil de cuisson, et un moyen de communication configuré pour recevoir au moins une donnée de l'appareil de cuisson, l'appareil de cuisson comprenant une unité de contrôle, et un moyen de communication configuré pour émettre une donnée vers le moyen de communication du dispositif d'alerte.

L'invention est caractérisée en ce que le système de cuisson met en oeuvre un procédé de cuisson d'un aliment, comprenant :
- Une étape de caractérisation de l'aliment à cuire dans laquelle l'unité de contrôle de l'appareil de cuisson reçoit au moins un type et une caractéristique physique de l'aliment ;
- Une étape d'estimation d'au moins un paramètre de cuisson dans laquelle l'unité de contrôle estime au moins un paramètre de cuisson;
- une étape d'établissement d'une communication entre l'appareil de cuisson et le dispositif d'alerte ;
- Une étape de transmission dans laquelle le moyen de communication de l'appareil de cuisson transmet au moyen de communication du dispositif d'alerte au moins les données correspondantes à l'au moins un paramètre de cuisson et des données relatives au moment où l'aliment à cuire a été mis en contact avec la plaque de cuisson de sorte à paramétrer le dispositif d'alerte ;
- Une étape d'interruption de la communication entre l'appareil de cuisson et le dispositif d'alerte ;
- Une étape de mesure d'une valeur de durée par le dispositif d'alerte, cette valeur de durée étant déterminée et comptabilisée à partir des données transmises au cours de l'étape de transmission ;

Une étape de signalisation par l'émission d'un signal par l'élément d'alerte du dispositif d'alerte En outre, le dispositif d'alerte comprend un moyen de fixation configuré pour fixer de manière amovible le dispositif d'alerte à une zone d'attache d'une face de l'appareil de cuisson.

Le dispositif d'alerte est complémentaire à l'appareil de cuisson et forme le système de cuisson. Le dispositif d'alerte peut être appairé avec l'appareil de cuisson considéré dès sa fabrication et ne fonctionne pas avec un autre appareil de cuisson.

Le dispositif d'alerte comprend une batterie qui peut être une pile. La batterie alimente en énergie le microcontrôleur, le moyen de communication et l'élément d'alerte. Le microcontrôleur reçoit une donnée du moyen de communication et transmet un signal à l'élément d'alerte de sorte à activer ce dernier.

L'élément d'alerte, lorsqu'il est activé, indique à un utilisateur une action à réaliser sur l'aliment à cuire de sorte que l'aliment soit cuit à un niveau de cuisson souhaité. Plus précisément, l'action à réaliser peut-être à réaliser immédiatement. Il s'agit alors d'une action en cours. Si l'action est à réaliser dans le futur, il s'agit d'une action à venir.

Les actions réalisées par l'utilisateur sur l'aliment sont par exemple :
- Mise en place de l'aliment à cuire sur l'au moins une plaque de cuisson, notamment après l'atteinte d'une température de préchauffage de l'appareil ;
- Retournement de l'aliment à cuire pour obtenir un niveau de cuisson défini;
- Retrait de l'aliment, notamment pour éviter une surcuisson.

Dans le cas où l'élément d'alerte indique uniquement qu'une action est à réaliser sans précision sur ladite action, l'utilisateur ne connait l'action qui est à réaliser que lorsqu'il la perçoit sur une interface homme-machine de l'appareil de cuisson lorsqu'il s'approche ou regarde en direction de celui-ci. De manière alternative, l'élément d'alerte peut indiquer directement quelle action est à réaliser. Dans ce cas, l'élément d'alerte est différent pour chaque action ou varie suivant l'action à réaliser.

Le moyen de communication du dispositif d'alerte reçoit au moins une donnée de l'appareil de cuisson. Ainsi, le moyen de communication est un moyen de réception qui ne fait que recevoir une donnée de l'appareil de cuisson et n'émet aucune donnée.

Le dispositif d'alerte comprend un moyen de fixation amovible de sorte que le dispositif d'alerte est assemblé démontable sur l'appareil de cuisson, et plus précisément sur une face de ce dernier. Il est possible de détacher le dispositif d'alerte de l'appareil de cuisson et de le fixer de nouveau sans dégrader ni le dispositif d'alerte, ni l'appareil de cuisson. Il n'existe pas de lien mécanique entre le dispositif d'alerte et l'appareil de cuisson lorsque le dispositif d'alerte est détaché ou déconnecté de l'appareil de cuisson. L'utilisateur peut donc s'éloigner de l'appareil de cuisson avec le dispositif d'alerte. Le dispositif d'alerte permet à un utilisateur d'être informé à distance d'une action à réaliser sur l'aliment pour obtenir le niveau de cuisson souhaité.

Le dispositif d'alerte est spécifique à l'appareil de cuisson. Il est donc conçu pour être positionné sur ce dernier, au niveau de la zone d'attache. Ainsi, il est facile de ranger le dispositif d'alerte en le fixant sur l'appareil de cuisson.

Le dispositif d'alerte a une seule fonction spécifique à réaliser qui est de « prévenir l'utilisateur qu'une action est à effectuer sur l'aliment pour obtenir un niveau de cuisson souhaité ». Il est donc simple, économique et robuste.

La plaque de cuisson de l'appareil de cuisson peut être plane comme sur une plancha ou avec des nervures comme dans un barbecue.

L'unité de contrôle est alimentée en énergie par une alimentation électrique générale de l'appareil de cuisson. L'unité de contrôle est reliée à un moyen de communication de l'appareil de cuisson. Le moyen de communication de l'appareil de cuisson transmet au moins une donnée vers le dispositif d'alerte. Ainsi, le moyen de communication de l'appareil de cuisson est un moyen d'émission qui ne fait qu'émettre une donnée de l'appareil de cuisson vers le dispositif d'alerte et ne reçoit aucune donnée de ce dernier.

La zone d'attache est spécifiquement conçue pour recevoir le dispositif d'alerte. La zone d'attache est positionnée sur une face de l'appareil de cuisson facilement accessible par l'utilisateur.

L'invention peut également présenter une ou plusieurs des caractéristiques suivantes prises seules ou en combinaison.

Selon un mode de réalisation, la zone d'attache a une forme complémentaire à celle du moyen de fixation du dispositif d'alerte.

Selon un mode de réalisation, la zone d'attache a une forme similaire à celle du moyen de fixation du dispositif d'alerte.

Selon un mode de réalisation, la zone d'attache comprend un élément de charge configuré pour recharger une batterie du dispositif d'alerte à distance lorsque ce dernier est positionné sur la zone d'attache.

Selon un mode de réalisation, le dispositif d'alerte est intégré à une interface homme/machine de commande de l'appareil de cuisson lorsque le dispositif d'alerte est fixé sur l'appareil de cuisson.

Ainsi l'appareil de cuisson ne comprend pas une interface homme/machine de commande additionnelle en plus de celle du dispositif d'alerte.

Selon un mode de réalisation, le moyen de communication de l'appareil de cuisson émet au moins une donnée vers le moyen de communication du dispositif d'alerte en utilisant une technologie choisie parmi : Bluetooth, lifi, infrarouge et radio fréquence, par exemple NFC. Selon un mode de réalisation, le moyen de fixation est choisi parmi : un aimant, un logement, et un clip.

Selon un mode de réalisation, le signal émis par l'élément d'alerte est choisi parmi : un signal visuel, un signal sonore, et un signal haptique.

Le signal visuel peut être réalisé par exemple au moyen d'un écran ou d'une lampe. Dans ce dernier cas, un temps de mise sous tension de la lampe, autrement dit son clignotement, peut varier en fonction de l'action à effectuer, ou dans le temps afin d'attirer l'attention de l'utilisateur. L'écran permet d'afficher quelle action est à effectuer sur l'aliment à cuire.

Le signal sonore peut être réalisé par exemple au moyen d'un son continu ou de manière alternative, d'un son discontinu. Son niveau ou sa fréquence peut également varier dans le temps afin d'attirer l'attention de l'utilisateur.

Le signal haptique permet d'indiquer au moyen par exemple d'une vibration qu'il est temps de réaliser une action sur l'aliment.

Selon un mode de réalisation, au cours de l'étape d'estimation d'au moins un paramètre de cuisson, l'unité de contrôle estime l'au moins un paramètre de cuisson correspondant à au moins une durée de cuisson d'une première face et au moins une durée de cuisson d'une deuxième face de l'aliment à cuire, - au cours de l'étape de transmission, le moyen de communication de l'appareil de cuisson transmet au moyen de communication du dispositif d'alerte au moins les données correspondantes à l'au moins une durée de cuisson de la première face et à l'au moins une durée de cuisson de la deuxième face,
- au cours de l'étape de signalisation, un signal est émis par l'élément d'alerte du dispositif d'alerte lorsqu'une valeur de durée mesurée correspond à la durée de l'au moins une durée de cuisson de la première face puis à la durée de l'au moins une durée de cuisson de la deuxième face.

Les étapes du procédé mettent en oeuvre le système selon l'invention de sorte que l'utilisateur puisse suivre facilement la cuisson de l'aliment et obtenir finalement un aliment cuit suivant le niveau de cuisson souhaité.

Plus précisément, le procédé comprend une étape de caractérisation. Dans cette étape, l'unité de contrôle de l'appareil de cuisson reçoit au moins le type et la caractéristique physique de l'aliment à cuire. Le type de l'aliment est déterminé avant que l'aliment ne soit placé sur la plaque de cuisson. Ainsi, une température de préchauffage dépend du type de l'aliment. La caractéristique physique correspond à une géométrie comme une épaisseur par exemple ou le poids de l'aliment. La caractéristique physique de l'aliment peut être déterminée avant ou après que l'aliment ait été mis en contact avec la plaque de cuisson.

Une des caractéristiques physique de l'aliment à cuire usuellement utilisée concerne l'épaisseur de l'aliment à cuire. Celle-ci peut être déterminée automatiquement par l'appareil de cuisson lorsque l'aliment est disposé sur l'appareil de cuisson ou bien être indiquée par l'utilisateur de façon que l'appareil de cuisson puisse estimer au préalable l'au moins un paramètre de cuisson. Selon une mise en oeuvre du procédé, au cours de l'étape d'estimation d'au moins un paramètre de cuisson, l'unité de contrôle estime l'au moins un paramètre de cuisson correspondant à au moins une durée de cuisson d'une première face et au moins une durée de cuisson d'une deuxième face de l'aliment à cuire, au cours de l'étape de transmission, le moyen de communication de l'appareil de cuisson transmet au moyen de communication du dispositif d'alerte au moins les données correspondantes à l'au moins une durée de cuisson de la première face et à l'au moins une durée de cuisson de la deuxième face, et au cours de l'étape de signalisation, un signal est émis par l'élément d'alerte du dispositif d'alerte lorsqu'une valeur de durée mesurée correspond à la durée de l'au moins une durée de cuisson de la première face puis à la durée de l'au moins une durée de cuisson de la deuxième face.

Selon une caractéristique, le procédé comprend une étape de mise en contact de l'aliment à cuire avec l'au moins une plaque de cuisson.

Dans l'étape d'estimation, l'unité de contrôle estime au moins un paramètre de cuisson.

Les paramètres de cuisson regroupent :
- au moins une température de l'aliment comme par exemple, une température à coeur de l'aliment autrement désigné par niveau de cuisson de l'aliment, c'est-à-dire la température prise entre les deux faces de l'aliment à cuire, ou
- au moins une température de la plaque de cuisson utilisée lors de la cuisson de l'aliment, comme par exemple une température de préchauffage correspondante à une température de la plaque de cuisson lors du préchauffage de la plaque de cuisson, ou une température de consigne de cuisson lors de la cuisson de l'aliment.
- une durée de préchauffage qui correspond au temps nécessaire pour que la plaque de cuisson atteigne la température de préchauffage, et
- au moins une durée de cuisson d'une première face et au moins une durée de cuisson d'une deuxième face. L'unité de contrôle peut estimer plusieurs durées de cuisson de la première face et de la deuxième face, correspondant à différents niveaux de cuisson de l'aliment.

Dans le cas d'une cuisson de l'aliment au moyen d'une seule plaque de cuisson, on distingue la durée de cuisson de la première face de l'aliment, et la durée de cuisson de la deuxième face de l'aliment qui intervient après retournement de l'aliment sur la plaque de cuisson. Une durée de cuisson totale correspond à la somme de la durée de cuisson de la première face et de la deuxième face, la durée de retournement étant considérée comme négligeable.

Lors de l'étape d'estimation, l'appareil de cuisson détermine automatiquement au moins une durée de cuisson d'une première face et au moins une durée de cuisson d'une deuxième face sans que cette durée soit spécifiée ou indiquée par l'utilisateur. L'utilisateur n'indique jamais une information de temps.

L'appareil de cuisson et le dispositif d'alerte ne sont pas en communication permanente. L'appareil de cuisson transmet ponctuellement au cours d'étapes bien déterminée, des informations au dispositif d'alerte. Pour cela, le procédé comprend une étape d'établissement d'une communication pendant laquelle une communication est établie entre l'appareil de cuisson et le dispositif d'alerte.

Puis, pendant l'étape de transmission, le moyen de communication de l'appareil de cuisson, sur activation de l'unité de contrôle, transmet au moyen de communication du dispositif d'alerte au moins les données correspondantes à l'au moins une durée de cuisson de la première face et à l'au moins une durée de cuisson de la deuxième face, et des données relatives au moment où l'aliment à cuire a été mis en contact avec la plaque de cuisson. De la sorte, le dispositif d'alerte reçoit lesdites données et le microcontrôleur active ou paramètre le dispositif d'alerte.

Le moment où l'aliment à cuire est mis en contact avec la plaque de cuisson peut être indiqué par l'utilisateur ou détecté par l'appareil de cuisson par exemple au moyen d'une mesure de la charge sur la plaque de cuisson à partir d'un capteur de température dit à « coefficient de température négatif », c'est-à-dire que plus la température augmente, plus la résistance du capteur diminue.

Ce moment peut alternativement être déterminé à partir de la détection de la fermeture d'un couvercle sur l'appareil de cuisson.

Enfin, la communication est interrompue lors de l'étape d'interruption.

Le dispositif d'alerte effectue une étape de mesure dans laquelle le dispositif d'alerte mesure une valeur de durée, c'est-à-dire un temps, à partir du moment où l'aliment à cuire a été mis en contact avec la plaque de cuisson afin d'ajuster la durée de cuisson déterminée par l'étape d'estimation avec la durée réelle à partir du contact de l'aliment avec la plaque de cuisson. La mesure de la valeur de durée est réalisée dans le même référentiel de temps que celui dans lequel est exprimé le moment où l'aliment à cuire a été mis en contact avec la plaque de cuisson. Le référentiel de temps peut être, par exemple, un fuseau horaire ou une heure locale renseignée par l'utilisateur lors d'un paramétrage du dispositif d'alerte. Le dispositif d'alerte comprend une horloge. Le dispositif d'alerte compte une durée jusqu'à atteindre la durée de cuisson de la première face ou de la deuxième face, ou décompte à partir de la durée de cuisson de la première face ou de la deuxième face.

Lorsque l'étape de mesure est terminée, l'élément d'alerte est activé de sorte à indiquer à l'utilisateur qu'une action est à réaliser sur l'aliment afin d'obtenir un niveau de cuisson souhaité. Selon un mode de réalisation, l'étape de mesure active immédiatement l'élément d'alerte après l'atteinte de la durée de cuisson. De manière alternative, l'étape de mesure active l'élément d'alerte un temps prédéfini avant l'atteinte de la durée de cuisson. Par exemple, le temps prédéfini est compris dans l'intervalle [0s, 30s] afin de laisser le temps à l'utilisateur de se rendre à proximité de l'appareil de cuisson pour qu'il puisse réaliser l'action correspondante à l'alerte. L'émission du signal par l'élément d'alerte, également désigné dans la suite par l'émission d'une alerte, est réalisée pendant une durée prédéfinie, par exemple, une durée comprise dans l'intervalle [0s,10s] afin de s'assurer que l'utilisateur considère cette alerte.

Selon un cas général de fonctionnement, l'unité de contrôle estime l'ensemble des durées de cuisson de la première face et de la deuxième face correspondant à chaque niveau de cuisson. Ensuite, lors de l'étape de transmission, le moyen de communication de l'appareil de cuisson transmet l'ensemble de ces durées au dispositif d'alerte. Ce dernier devient alors autonome. Le dispositif d'alerte débute l'étape de mesure en prenant en compte le moment où l'aliment à cuire a été mis en contact avec la plaque de cuisson. Dès que la valeur de la durée mesurée atteint une durée de cuisson de la première face ou de la deuxième face correspondant à chaque niveau de cuisson, l'élément d'alerte émet un signal. Le moment où l'utilisateur réalise l'action de retournement n'est pas forcément connu du dispositif d'alerte. Ce dernier indique donc toutes les durées de cuisson. Plus précisément, le dispositif d'alerte va signaler, après une durée de cuisson de la première face correspondant au niveau de cuisson saignant, que l'action de retournement peut être réalisée pour obtenir un niveau de cuisson saignant, puis le dispositif d'alerte va signaler après une durée de cuisson de la première face correspondant au niveau de cuisson à point que l'action de retournement peut être réalisée pour obtenir un niveau de cuisson à point même si l'action de retournement a déjà été réalisée. Le dispositif d'alerte va ainsi signaler l'ensemble des durées de cuisson de chaque face correspondant à tous les niveaux de cuisson. Selon un mode de réalisation, le type de l'aliment à cuire est reçu d'un dispositif de type agencé pour déterminer automatiquement le type de l'aliment à cuire ou d'un dispositif de sélection de type agencé pour permettre une sélection du type de l'aliment à cuire dans une liste d'aliment, et/ou la caractéristique physique de l'aliment à cuire est reçue d'un dispositif de caractérisation agencé pour déterminer automatiquement au moins une caractéristique physique de l'aliment à cuire ou d'un dispositif d'indication agencé pour permettre à un utilisateur d'indiquer au moins une caractéristique physique de l'aliment à cuire.

Le dispositif de type permet de déterminer automatiquement le type de l'aliment à cuire, par exemple en mettant en oeuvre un procédé de reconnaissance d'images.

Le dispositif de sélection de type permet à l'utilisateur de sélectionner manuellement le type de l'aliment à cuire dans une liste d'aliment.

Le dispositif de type et le dispositif de sélection de type sont intégrés ou déportés à l'appareil de cuisson.

Le dispositif de caractérisation permet de déterminer automatiquement la caractéristique physique de l'aliment à cuire, par exemple en mettant en oeuvre un procédé de reconnaissance d'images, un moyen de mesure qui serait intégré à l'appareil de cuisson comme par exemple celui décrit dans la demande de brevet FR2013564, ou un accessoire comme la pince décrite dans la demande de brevet FR2102570 déposées au nom de la demanderesse.

Le dispositif d'indication permet à l'utilisateur d'indiquer manuellement la caractéristique physique de l'aliment à cuire sur un écran tactile par exemple.

Le dispositif de caractérisation et le dispositif d'indication sont intégrés ou déportés à l'appareil de cuisson.

Selon un mode de réalisation, le procédé comprend une étape de réalisation d'une action dans laquelle l'unité de contrôle reçoit une information sur une réalisation d'une action sur l'appareil de cuisson.

Lors de l'étape de réalisation, l'unité de contrôle reçoit une information sur une réalisation d'une action sur l'appareil de cuisson. Cette information peut être reçue d'un dispositif de détection d'une action qui détermine automatiquement qu'une action a été réalisée sur l'aliment à cuire. Le dispositif de détection d'une action met en oeuvre un procédé de reconnaissance d'images par exemple, ou une détection de variation de poids sur la plaque de cuisson. De manière alternative, l'information est reçue d'un dispositif d'information qui permet d'informer l'appareil de cuisson qu'une action a été réalisée. Le dispositif d'information est par exemple un bouton d'action positionné sur une face de l'appareil de cuisson ou sur un écran tactile de l'appareil de cuisson.

L'étape de réalisation permet à l'unité de contrôle de déclencher une réalisation d'une action suivante.

Par exemple, les actions réalisées par l'appareil de cuisson sont :
- Préchauffage de l'au moins une plaque de cuisson ;
- Cuisson d'une première face de l'aliment ;
- Cuisson d'une deuxième face de l'aliment ;
- Arrêt du chauffage de l'au moins une plaque de cuisson.

Dans un premier exemple, seule l'étape de réalisation de l'action de retournement est indiquée. En effet, en plus de l'alerte sur le dispositif d'alerte, l'appareil de cuisson peut émettre un son par exemple, après le préchauffage de l'au moins une plaque de cuisson ou après la fin de la cuisson de la première face de l'aliment. Le son indique à l'utilisateur qu'il peut mettre l'aliment sur la plaque de cuisson.

Selon un mode de réalisation, le procédé comprend une étape ultérieure de transmission dans laquelle le moyen de communication de l'appareil de cuisson transmet à l'au moins un moyen de communication du dispositif d'alerte une mise à jour d'au moins les données correspondantes l'au moins une durée de cuisson de la deuxième face en fonction du moment où une action de retournement de l'aliment à cuire a été réalisé par l'utilisateur à la suite de l'étape de signalisation par l'émission d'un signal par l'élément d'alerte du dispositif d'alerte, lorsqu'une valeur de durée mesurée correspond à la durée de l'au moins une durée de cuisson de la première face.

Par exemple, la réalisation par l'utilisateur de l'action de mise en place de l'aliment sur l'au moins une plaque de cuisson permet à l'appareil de cuisson de débuter l'action de cuisson de la première face de l'aliment. Le moment où l'utilisateur réalise l'action de retournement débute l'action de cuisson de la deuxième face de l'aliment. La détection de l'action de retournement permet de déterminer le niveau de cuisson souhaité. Plus précisément, le dispositif d'alerte va signaler après une durée de cuisson de la première face correspondant au niveau de cuisson saignant que l'action de retournement peut être réalisée pour obtenir un niveau de cuisson saignant. En l'absence de détection de l'étape de réalisation, l'appareil de cuisson poursuit l'action de cuisson de la première face et le dispositif d'alerte signale, après une durée de cuisson de la première face correspondant au niveau de cuisson à point, que l'action de retournement peut être réalisée pour obtenir ce niveau de cuisson suivant dans le cas présent à point. L'action de cuisson de la première face est poursuivie jusqu'à la détection de l'action de retournement qui permet d'une part de débuter l'action de cuisson de la deuxième face, et d'autre part de réaliser de nouveau les étapes d'établissement, de transmission et d'interruption pour transmettre la durée de cuisson de la deuxième face associée au niveau de cuisson choisi ou uniquement le niveau de cuisson choisi. L'action de cuisson de la deuxième face est réalisée pendant une durée permettant d'atteindre le niveau de cuisson correspondant au niveau de cuisson atteint lors de la cuisson de la première face. Autrement dit, si l'utilisateur effectue l'action de retournement lorsque la première face à atteint le niveau « à point », l'appareil de cuisson effectuera l'action de cuisson de la deuxième face pendant une durée correspondante au niveau de cuisson « à point ». Le dispositif d'alerte signalera uniquement l'atteinte du niveau « à point » à l'utilisateur.

Selon un mode de réalisation, le procédé comprend une étape de déconnexion de l'au moins un dispositif d'alerte dans laquelle l'au moins un dispositif d'alerte est retiré de la zone d'attache. Lors de l'étape de déconnexion, le dispositif d'alerte est retiré de la zone d'attache de l'appareil de cuisson. Le dispositif d'alerte est donc dissocié physiquement de l'appareil de cuisson. Cela permet à un utilisateur de s'éloigner de l'appareil de cuisson.

Selon un mode de réalisation, le procédé comprend une étape d'indication dans laquelle l'unité de contrôle de l'appareil de cuisson reçoit au moins un niveau de cuisson souhaité et/ou un aspect final souhaité.

Selon un mode de réalisation, l'unité de contrôle estime l'au moins une durée de cuisson de la première face et l'au moins une durée de cuisson de la deuxième face en mettant en oeuvre un algorithme de cuisson prédéterminé recevant en entrée au moins le type et la caractéristique physique de l'aliment à cuire.

L'algorithme permet de déterminer la durée de cuisson de la première face et de la deuxième face pour chaque niveau de cuisson en amont, au tout début ou en parallèle du début de la cuisson de l'aliment, selon le moment ou l'aliment a été positionné sur la plaque de cuisson. Ainsi, avant le début, au tout début ou en parallèle du début de cuisson, l'algorithme détermine pour chaque action à réaliser sur l'aliment la durée de cuisson associée à cette action pour chaque niveau de cuisson, c'est-à-dire le temps à attendre par l'utilisateur avant que l'action soit terminée pour chaque niveau de cuisson, donc le temps à attendre avant de réaliser la prochaine action.

De manière alternative, l'algorithme détermine l'ensemble des actions à effectuer sur l'aliment pour obtenir le niveau de cuisson souhaité et les durées associées. Dans ce cas, l'utilisateur doit indiquer le niveau de cuisson souhaité.

Selon un mode de réalisation, le procédé comprend également une étape de préchauffage dans laquelle l'appareil de cuisson chauffe l'au moins une plaque de cuisson à une température de préchauffage et une étape de cuisson dans laquelle l'appareil de cuisson chauffe l'au moins une plaque de cuisson à une température de consigne de cuisson déterminée en fonction du type de l'aliment à cuire.

Ainsi la température de l'au moins une plaque est adaptée en fonction de l'action à réaliser.

Selon un mode de réalisation, l'unité de contrôle détermine la température de préchauffage et/ou la température de consigne de cuisson à partir du type et/ou de la caractéristique physique de l'aliment.

Selon un mode de réalisation, le procédé comprend une étape d'affichage dans laquelle l'au moins une durée de cuisson est affichée sur un écran d'affichage de l'appareil de cuisson. L'invention sera mieux comprise, grâce à la description ci-après, qui se rapporte à plusieurs modes de réalisation selon la présente invention, donnés à titre d'exemples non limitatifs et expliqués avec référence au dessin schématique annexé, dans lequel :
[Fig. 1] est une représentation schématique du procédé selon l'invention au cours du temps;
[Fig. 2] est une représentation d'un système de cuisson selon l'invention ;

L'invention porte sur un système de cuisson comprenant un dispositif d'alerte à distance 3 et un appareil de cuisson 2 électrique par contact avec au moins une plaque de cuisson 26.

Le dispositif d'alerte 3 est un élément complémentaire de l'appareil de cuisson 2. Le dispositif d'alerte 3 est appairé avec l'appareil de cuisson 2 considéré et ne fonctionne pas avec un autre appareil de cuisson.

Ledit dispositif d'alerte 3 comprend au moins une batterie, qui peut être une pile. La batterie alimente en énergie au moins un microcontrôleur, au moins un moyen de communication et au moins un élément d'alerte.

L'au moins un microcontrôleur reçoit une donnée du moyen de communication et transmet un signal à l'élément d'alerte de sorte à activer ce dernier.

L'au moins un élément d'alerte est configuré pour émettre au moins un signal sur une action à réaliser par un utilisateur 1 afin d'obtenir un niveau de cuisson souhaité. L'élément d'alerte, lorsqu'il est activé, indique à l'utilisateur 1 une action à réaliser sur l'aliment à cuire de sorte que l'aliment soit cuit au niveau de cuisson souhaité.

Les actions réalisées par l'utilisateur 1 sur l'aliment sont par exemple :
- Mise en place de l'aliment à cuire sur l'au moins une plaque de cuisson ;
- Retournement de l'aliment à cuire pour obtenir un niveau de cuisson défini;
- Retrait de l'aliment.

Dans le cas où l'élément d'alerte indique uniquement qu'une action est à réaliser sans précision sur ladite action, l'utilisateur ne connait l'action qui est à réaliser que lorsqu'il s'approche de l'appareil de cuisson 2. De manière alternative, l'élément d'alerte peut indiquer directement quelle action est à réaliser. Dans ce cas, l'élément d'alerte est différent pour chaque action ou varie suivant l'action à réaliser.

Le signal émis par l'au moins un élément d'alerte est choisi parmi : un signal visuel, un signal sonore, et un signal haptique.

Le signal visuel peut être réalisé par exemple au moyen d'un écran ou d'une lampe. Dans ce dernier cas, un temps de mise sous tension de la lampe, autrement dit son clignotement, peut varier en fonction de l'action à effectuer, ou dans le temps afin d'attirer l'attention de l'utilisateur 1. L'écran permet d'afficher quelle action est à effectuer sur l'aliment à cuire.

Le signal sonore peut être réalisé par exemple au moyen d'un son continu ou de manière alternative, d'un son discontinu. Son niveau ou sa fréquence peut également varier dans le temps afin d'attirer l'attention de l'utilisateur 1.

Le signal haptique permet d'indiquer au moyen par exemple d'une vibration qu'il est temps de réaliser une action sur l'aliment.

L'au moins un moyen de communication est configuré pour recevoir au moins une donnée dudit appareil de cuisson 2. Le moyen de communication est donc un moyen de réception qui ne fait que recevoir une donnée de l'appareil de cuisson 2 et n'émet aucune donnée. La réception de l'au moins une donnée de l'appareil de cuisson est réalisée pendant une durée limitée.

Le dispositif d'alerte 3 à distance comprend également au moins un moyen de fixation configuré pour fixer de manière amovible l'au moins un dispositif d'alerte 3 à une face de l'appareil de cuisson 2. Le dispositif d'alerte 3 est donc assemblé démontable sur l'appareil de cuisson 2, et plus précisément sur une face de ce dernier. Il est possible de détacher le dispositif d'alerte 3 de l'appareil de cuisson 2 et de le fixer de nouveau sans dégrader ni le dispositif d'alerte 3, ni l'appareil de cuisson 2. Il n'existe pas de lien mécanique entre le dispositif d'alerte 3 et l'appareil de cuisson 2 lorsque le dispositif d'alerte 3 est détaché ou déconnecté de l'appareil de cuisson 2. L'utilisateur 1 peut donc s'éloigner de l'appareil de cuisson 2 avec le dispositif d'alerte 3. Le dispositif d'alerte 3 permet à un utilisateur 1 d'être informé à distance d'une action à réaliser sur l'aliment pour obtenir le niveau de cuisson souhaité.

Selon un mode de réalisation, le moyen de fixation est choisi parmi : un aimant, un logement, et un clip.

Le dispositif d'alerte 3 est spécifique à l'appareil de cuisson 2. Il est donc conçu pour être positionné sur ce dernier. Ainsi, il est facile de ranger le dispositif d'alerte 3 en le fixant sur l'appareil de cuisson 2.

Le dispositif d'alerte 3 a une seule fonction spécifique à réaliser « prévenir l'utilisateur 1 qu'une action est à effectuer pour obtenir un niveau de cuisson souhaité». Il est donc simple, économique et robuste.

L'appareil de cuisson 2 comprend au moins une plaque de cuisson qui peut être plane comme sur une plancha ou avec des nervures comme dans un barbecue.

L'appareil de cuisson 2 comprend au moins une unité de contrôle 21 qui est alimenté en énergie par une alimentation électrique générale de l'appareil de cuisson 2. L'unité de contrôle 21 est reliée à au moins un moyen de communication.

Le moyen de communication de l'appareil de cuisson 2 est configuré pour communiquer avec l'au moins un moyen de communication du dispositif d'alerte 3, c'est-à-dire qu'il transmet au moins une donnée avec le dispositif d'alerte 3. Le moyen de communication est donc un moyen d'émission qui ne fait qu'émettre une donnée de l'appareil de cuisson 2 vers le dispositif d'alerte 3 et ne reçoit aucune donnée.

L'appareil de cuisson 2 comprend au moins une zone d'attache configurée pour coopérer avec l'au moins un moyen de fixation du dispositif d'alerte 3 à distance. La zone d'attache est spécifiquement conçue pour recevoir le dispositif d'alerte 3. La zone d'attache est positionnée sur un face de l'appareil de cuisson 2 facilement accessible par l'utilisateur 1.

Selon un mode de réalisation, la zone d'attache a une forme complémentaire à celle du moyen de fixation du dispositif d'alerte 3.

Selon un mode de réalisation, la zone d'attache a une forme similaire à celle du moyen de fixation du dispositif d'alerte 3.

Selon un mode de réalisation, la zone d'attache comprend un élément de charge configuré pour recharger une batterie du dispositif d'alerte 3 à distance lorsque ce dernier est positionné sur la zone d'attache.

L'appareil de cuisson 2 peut comprendre également un dispositif de détection d'action qui détermine automatiquement qu'une action a été réalisée sur l'aliment à cuire. Le dispositif de détection d'action met en oeuvre un procédé de reconnaissance d'images par exemple, ou détecte une variation de charge de la plaque de cuisson à partir d'un capteur de température dit à « coefficient de température négatif », c'est-à-dire que plus la température augmente, plus la résistance du capteur diminue. De manière alternative, l'appareil de cuisson 2 comprend un dispositif d'information qui permet d'informer l'appareil de cuisson 2 qu'une action été réalisée. Le dispositif d'information est par exemple un bouton d'action positionné sur une face de l'appareil de cuisson ou sur un écran tactile de l'appareil de cuisson 2.

L'appareil de cuisson peut comprendre également un dispositif de type 23 qui permet de déterminer automatiquement un type de l'aliment à cuire, par exemple en mettant en oeuvre un procédé de reconnaissance d'images.

De manière alternative, l'appareil de cuisson 2 comprend un dispositif de sélection de type 24 qui permet à l'utilisateur 1 de sélectionner manuellement le type de l'aliment à cuire dans une liste d'aliment.

Le dispositif de type et le dispositif de sélection de type sont intégrés ou déportés à l'appareil de cuisson 2.

L'appareil de cuisson 2 peut comprendre également un dispositif de caractérisation 25 qui permet de déterminer automatiquement la caractéristique physique de l'aliment à cuire, par exemple en mettant en oeuvre un procédé de reconnaissance d'images, un moyen de mesure qui serait intégré à l'appareil de cuisson comme par exemple celui décrit dans la demande de brevet FR2013564, ou un accessoire comme la pince décrite dans la demande de brevet FR2102570 De manière alternative, un dispositif d'indication 22 permet à l'utilisateur 1 d'indiquer manuellement la caractéristique physique de l'aliment à cuire sur un écran tactile par exemple. Le dispositif de caractérisation et le dispositif d'indication sont intégrés ou déportés à l'appareil de cuisson 2.

L'appareil de cuisson 2 peut comprendre également un dispositif de sélection du niveau de cuisson qui permet à l'utilisateur 1 de sélectionner manuellement ou d'indiquer le niveau de cuisson souhaité dans une liste.

L'appareil de cuisson 2 peut comprendre également un dispositif de sélection d'aspect qui permet à l'utilisateur 1 de sélectionner manuellement ou d'indiquer l'aspect final souhaité dans une liste.

Le dispositif de sélection de niveau de cuisson et/ou le dispositif de sélection d'aspect est intégré ou déporté à l'appareil de cuisson 2.

Selon un mode de réalisation, l'appareil de cuisson 2 comprend un écran d'affichage qui peut être tactile.

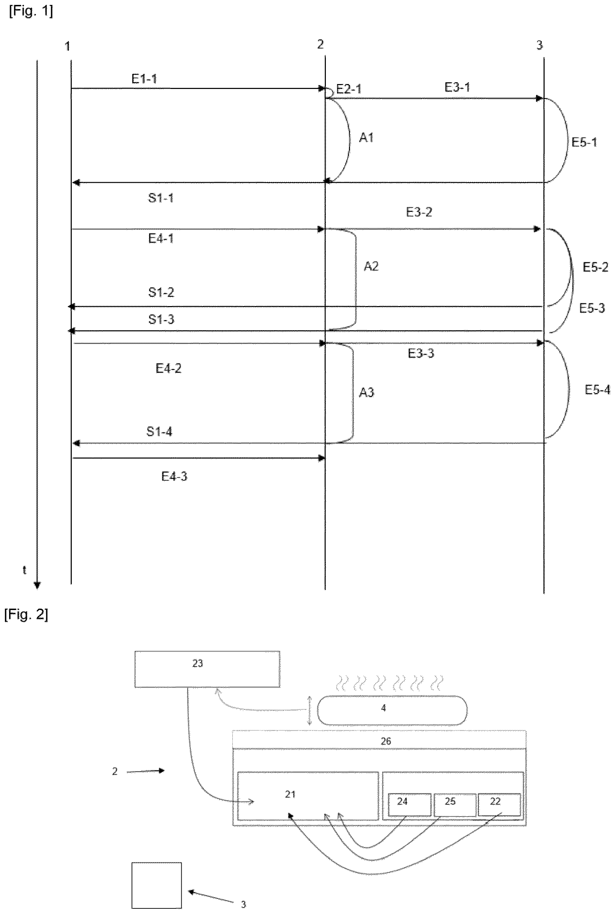

Dans le système selon l'invention, le moyen de communication de l'appareil de cuisson 2 émet au moins une donnée vers le moyen de communication du dispositif d'alerte 3 en utilisant une technologie choisie parmi : radio fréquence, infrarouge, radio fréquence, Bluetooth, et lifi. L'invention selon un mode de réalisation illustré en figure 1, porte sur un procédé de cuisson d'un aliment par le système selon l'invention. La figure 1 illustre les étapes du procédé au cours du temps t.

Le procédé comprend une étape de caractérisation E1-1 pendant laquelle l'unité de contrôle de l'appareil de cuisson 2 reçoit un type de l'aliment à cuire. Le type est déterminé par le dispositif de type ou comme représenté sur la figure 1, par le dispositif de sélection de type qui permet à l'utilisateur 1 d'indiquer dans la liste d'aliment, le type de l'aliment à cuire. Le type de l'aliment est déterminé avant que l'aliment ne soit placé sur la plaque de cuisson. Pendant l'étape de caractérisation E1-1, l'unité de contrôle de l'appareil de cuisson 2 reçoit également une caractéristique physique de l'aliment à cuire. La caractéristique physique est déterminée par le dispositif de caractérisation ou comme représenté sur la figure 1, par le dispositif d'indication qui permet à l'utilisateur 1 d'indiquer la caractéristique physique de l'aliment à cuire. La caractéristique physique de l'aliment peut être déterminée avant ou après que l'aliment ait été mis en contact avec la plaque de cuisson.

Selon une caractéristique, le procédé comprend une étape de mise en contact de l'aliment à cuire avec l'au moins une plaque de cuisson.

Le procédé de cuisson met alors en oeuvre une étape d'estimation E2-1 d'au moins un paramètre de cuisson dans laquelle l'unité de contrôle estime au moins un paramètre de cuisson.

Les paramètres de cuisson regroupent :
-- au moins une température de l'aliment comme par exemple, une température à coeur de l'aliment autrement désigné par niveau de cuisson de l'aliment, c'est-à-dire la température prise entre les deux faces de l'aliment à cuire, ou

- au moins une température de la plaque de cuisson utilisée lors de la cuisson de l'aliment, comme par exemple une température de préchauffage correspondant à une température de la plaque de cuisson lors du préchauffage de la plaque de cuisson, ou une température de consigne de cuisson lors de la cuisson de l'aliment.
- une durée de préchauffage qui correspond au temps nécessaire pour que la plaque de cuisson atteigne la température de préchauffage, et
- au moins une durée de cuisson d'une première face et au moins une durée de cuisson d'une deuxième face. L'unité de contrôle peut estimer plusieurs durées de cuisson de la première face et de la deuxième face, correspondant à différents niveaux de cuisson de l'aliment.

Lors de l'étape d'estimation E2-1, l'unité de contrôle estime au moins une durée de cuisson d'une première face et au moins une durée de cuisson d'une deuxième face, la température de préchauffage, la température de consigne de cuisson et la durée de de préchauffage. Préférentiellement, la température de préchauffage est déterminée par l'unité de contrôle en fonction du type de l'aliment à cuire.

Dans le cas d'une cuisson de l'aliment au moyen d'une seule plaque de cuisson, telle que représentée en figure 2, la cuisson de l'aliment comprend une étape de cuisson A2 d'une première face de l'aliment pendant une durée de cuisson de la première face de l'aliment, et une étape de cuisson A3 d'une deuxième face de l'aliment pendant une durée de cuisson de la deuxième face de l'aliment qui intervient après retournement de l'aliment sur la plaque de cuisson. Une durée de cuisson totale correspondant à la somme de la durée de cuisson de la première face et de la deuxième face, la durée de retournement étant considérée comme négligeable. L'appareil de cuisson 2 lors de l'étape d'estimation E2-1 détermine notamment chaque durée de cuisson pour la première face et pour la deuxième face de l'aliment à cuire en fonction d'un niveau de cuisson. Autrement dit, l'appareil de cuisson 2 détermine pour chaque niveau de cuisson, la durée de cuisson de la première et de la deuxième face.

Selon un mode de réalisation, l'unité de contrôle estime l'au moins une durée de cuisson en mettant en oeuvre un algorithme de cuisson prédéterminé recevant en entrée au moins le type et la caractéristique physique de l'aliment à cuire.

L'algorithme permet de déterminer la durée de cuisson en amont du début de la cuisson de l'aliment. Ainsi, avant le début de cuisson, l'algorithme détermine pour chaque action à réaliser sur l'aliment la durée de cuisson associée à cette action, c'est-à-dire le temps à attendre par l'utilisateur avant que l'action soit terminée, donc le temps à attendre avant de réaliser la prochaine action.

Les actions à réaliser par l'appareil de cuisson 2 sont :
- Préchauffage de l'au moins une plaque de cuisson ;
- Cuisson d'une première face de l'aliment ;
- Cuisson d'une deuxième face de l'aliment ;
- Arrêt du chauffage de l'au moins une plaque de cuisson.

Après l'étape d'estimation E2-1, l'appareil de cuisson effectue une première étape d'établissement puis une première étape de transmission E3-1 dans laquelle l'au moins un moyen de communication de l'appareil de cuisson 2 transmet au moins une donnée à l'au moins un moyen de communication du dispositif d'alerte 3 de sorte à activer le dispositif d'alerte et enfin une étape d'interruption. L'appareil de cuisson et le dispositif d'alerte ne sont pas en communication permanente. L'appareil de cuisson transmet ponctuellement des informations au dispositif d'alerte. L'au moins une donnée transmise correspond à la durée de préchauffage, la durée de cuisson d'une première face et la durée de cuisson d'une deuxième face pour chaque niveau de cuisson souhaité.

Après cette transmission, l'appareil de cuisson 2 débute l'étape de préchauffage A1 correspondant à une action de préchauffage de l'au moins une plaque de cuisson dans laquelle l'appareil de cuisson chauffe l'au moins une plaque de cuisson à la température de préchauffage pendant la durée de préchauffage.

En parallèle, le dispositif d'alerte 3 débute une première étape de mesure E5-1 dans laquelle le dispositif d'alerte 3 mesure une valeur de durée, c'est-à-dire un temps. Le dispositif d'alerte 3 comprend donc une horloge. Le dispositif d'alerte 3 compte une durée jusqu'à atteindre la durée de préchauffage, ou décompte à partir de la durée de préchauffage.

A la fin de la durée de préchauffage, la première étape de mesure E5-1 est terminée. L'élément d'alerte est alors activé. De manière alternative, l'élément d'alerte est activé un temps prédéfini avant la fin de la première étape de mesure. L'élément d'alerte activé indique à l'utilisateur 1 au moyen d'un signal S1-1 qu'une action est à réaliser sur l'aliment de sorte à obtenir un niveau de cuisson souhaité. Dans le cas présent, l'action à réaliser est la mise en place de l'aliment à cuire sur l'au moins une plaque de cuisson.

De manière alternative, l'appareil de cuisson peut émettre un son, par exemple, après le préchauffage de l'au moins une plaque de cuisson ou après la fin de la cuisson de la première face de l'aliment. Le son indique à l'utilisateur qu'il peut mettre l'aliment sur la plaque de cuisson. Afin de pouvoir s'éloigner du dispositif de cuisson 2 tout en sachant quand l'étape de préchauffage A1 est terminée, le procédé comprend, de manière optionnelle, une étape de déconnexion de l'au moins un dispositif d'alerte 3 dans laquelle l'au moins un dispositif d'alerte 3 est retiré de la zone d'attache. Le dispositif d'alerte 3 est donc dissocié physiquement de l'appareil de cuisson 2. Préférentiellement, le dispositif d'alerte est retiré par l'utilisateur 1. Ensuite, lors d'une première étape de réalisation E4-1 d'une action, l'unité de contrôle reçoit une information sur une réalisation d'une action sur l'appareil de cuisson 2. Cette information peut être reçue par l'unité de contrôle du dispositif de détection d'action ou du dispositif d'information. Après l'étape de préchauffage A1, l'action à réaliser est la mise en contact de l'aliment à cuire avec la plaque de cuisson. La première étape de réalisation E4-1 suivant l'étape de préchauffage A1 indique donc que cette action a été réalisée par l'utilisateur 1. La première étape de réalisation E4-1 indique le moment où l'aliment à cuire est mis en contact avec la plaque de cuisson.

La réalisation par l'utilisateur 1 de l'action de mise en place de l'aliment sur l'au moins une plaque de cuisson permet à l'appareil de cuisson 2 de débuter d'une part l'étape A2 correspondante à action de cuisson de la première face de l'aliment et d'autre part de réaliser une deuxième étape d'établissement, de transmission E3-2 et d'interruption. Lors de cette deuxième étape de transmission E3-2, l'appareil de cuisson indique au dispositif d'alerte que celui-ci peut débuter une deuxième étape de mesure E5-2. Le dispositif d'alerte reçoit donc des données relatives au moment où l'aliment à cuire a été mis en contact avec la plaque de cuisson. Lors de la deuxième étape de mesure E5-2, le dispositif d'alerte 3 mesure une valeur de durée jusqu'à atteindre la durée de cuisson de la première face correspondant au premier niveau de cuisson, c'est-à-dire un niveau de cuisson « saignant », ou décompte à partir de ladite durée de cuisson de la première face. La mesure de la valeur de durée est réalisée dans le même référentiel de temps que celui dans lequel est exprimé le moment où l'aliment à cuire a été mis en contact avec la plaque de cuisson. Le référentiel de temps peut être, par exemple, un fuseau horaire ou une heure locale renseignée par l'utilisateur lors d'un paramétrage du dispositif d'alerte.

A la fin de la durée de cuisson de la première face correspondant au niveau de cuisson saignant », la deuxième étape de mesure E5-2 est terminée. L'élément d'alerte est alors activé. De manière alternative, l'élément d'alerte est activé un temps prédéfini avant la fin de la deuxième étape de mesure E5-2. L'élément d'alerte activé indique à l'utilisateur 1 au moyen d'un signal S1-2 qu'une action est à réaliser sur l'aliment de sorte à obtenir le niveau de cuisson « saignant». Dans le cas présent, l'action à réaliser est le retournement l'aliment à cuire sur la plaque de cuisson.

Le moment où l'utilisateur réalise l'action de retournement débute l'étape A3 correspondant à l'action de cuisson de la deuxième face de l'aliment et détermine le niveau de cuisson souhaité. Autrement dit, en l'absence d'une détection d'une deuxième étape de réalisation d'une action, le dispositif d'alerte effectue une troisième étape de mesure E5-3 jusqu'à la fin de la durée de cuisson de la première face correspondant au niveau de cuisson suivant, c'est-à-dire « à point ».

La troisième étape de mesure E5-3 terminée, l'élément d'alerte est alors activé. De manière alternative, l'élément d'alerte est activé un temps prédéfini avant la fin de la troisième étape de mesure E5-3. L'élément d'alerte activé indique à l'utilisateur 1 au moyen d'un signal S1-3 qu'une action est à réaliser sur l'aliment de sorte à obtenir le niveau de cuisson « à point ».

L'action de cuisson de la première face est poursuivie jusqu'à la détection de l'action de retournement qui permet d'une part de débuter l'étape de cuisson A3 de la deuxième face, et d'autre part de réaliser une troisième étape d'établissement, une troisième étape de transmission E3-3, et une troisième étape d'interruption. Lors de la troisième étape de transmission E3-3, l'appareil de cuisson indique au dispositif d'alerte que celui-ci peut débuter une quatrième étape de mesure E5-4 correspondant à une mesure d'une durée permettant d'atteindre le niveau de cuisson atteint sur la première face de l'aliment. Lors de la quatrième étape de mesure E5-2, le dispositif d'alerte 3 mesure une valeur de durée jusqu'à atteindre la durée de cuisson de la première face correspondant dans le cas présent au niveau de cuisson « à point », ou décompte à partir de ladite durée de cuisson de la deuxième face.

Le dispositif d'alerte 3 signalera via un nouveau signal S1-4 uniquement l'atteinte du niveau « à point » à l'utilisateur 1. L'utilisateur 1 retire alors l'aliment à cuire de la plaque de cuisson et indique à l'appareil de cuisson que l'étape de réalisation E4-3 est réalisée. L'appareil de cuisson 2 arrête alors le chauffage de l'au moins une plaque de cuisson.

Ainsi, l'utilisateur 1 a facilement obtenu l'aliment au niveau de cuisson souhaité (à point).

De manière alternative, le niveau de cuisson souhaité peut être précisé par l'utilisateur au moyen du dispositif de sélection du niveau de cuisson

Dans ce cas, l'algorithme détermine l'ensemble des actions à effectuer sur l'aliment pour obtenir uniquement la cuisson souhaitée et les durées associées. Ce mode de réalisation peut être combiné avec la présence d'une étape de réalisation. Dans ce cas, l'étape de transmission indique des données relatives au moment où l'aliment à cuire a été mis en contact avec la plaque de cuisson de sorte à paramétrer le dispositif d'alerte.

Selon un mode de réalisation, lors de l'étape d'estimation, l'unité de contrôle détermine la température de consigne de cuisson qui sera appliquée lors de l'étape de cuisson A2, A3. Préférentiellement, la température de consigne de cuisson est déterminée à partir du type et/ou de la caractéristique physique de l'aliment.

Selon un mode de réalisation, le procédé comprend une étape d'affichage dans laquelle l'au moins une durée de cuisson est affichée sur l'écran d'affichage de l'appareil de cuisson.

Dans un autre mode de réalisation, le niveau de cuisson souhaité n'est pas précisé par l'utilisateur et le procédé ne comprend pas d'étapes de réalisation. Dans ce cas, après l'étape d'estimation, l'appareil de cuisson effectue une étape d'établissement puis une étape de transmission dans laquelle l'au moins un moyen de communication de l'appareil de cuisson 2 transmet au moins une donnée à l'au moins un moyen de communication du dispositif d'alerte 3 de sorte à activer le dispositif d'alerte et enfin une étape d'interruption. L'au moins une donnée transmise correspond à la durée de préchauffage, la durée de cuisson d'une première face et la durée de cuisson d'une deuxième face pour chaque niveau de cuisson.

Après cette transmission, le dispositif d'alerte devient indépendant de l'appareil de cuisson. Autrement dit, il n'y a plus de communication entre eux.

L'appareil de cuisson 2 débute l'étape de préchauffage correspondant à une action de préchauffage puis, lorsque la durée de préchauffage sera terminée, l'appareil de cuisson débutera l'étape de cuisson de la première face et de la deuxième face sans opérer de distinction entre elles.

En parallèle, le dispositif d'alerte 3 débute une première étape de mesure dans laquelle le dispositif d'alerte 3 mesure une valeur de durée jusqu'à atteindre la durée de préchauffage, ou décompte à partir de la durée de préchauffage.

A la fin de la durée de préchauffage, la première étape de mesure est terminée. L'élément d'alerte est alors activé. De manière alternative, l'élément d'alerte est activé un temps prédéfini avant la fin de la première étape de mesure. L'élément d'alerte activé indique à l'utilisateur 1 au moyen d'un signal qu'une action est à réaliser sur l'aliment de sorte à obtenir un niveau de cuisson souhaité. Dans le cas présent, l'action à réaliser est la mise en place de l'aliment à cuire sur l'au moins une plaque de cuisson.

Afin de pouvoir s'éloigner du dispositif de cuisson 2 tout en sachant quand l'étape de préchauffage est terminée, le procédé comprend, de manière optionnelle, une étape de déconnexion de l'au moins un dispositif d'alerte 3.

A la fin de la première étape de mesure, que l'action de mise en contact de l'aliment à cuire avec la plaque de cuisson soit ou non réalisée, le dispositif d'alerte débute une deuxième étape de mesure jusqu'à atteindre la durée de cuisson de la première face correspondant au premier niveau de cuisson, c'est-à-dire un niveau de cuisson « peu cuit », ou décompte à partir de ladite durée de cuisson de la première face.

A la fin de la durée de cuisson de la première face correspondant au niveau de cuisson « peu cuit », la deuxième étape de mesure est terminée. L'élément d'alerte est alors activé. De manière alternative, l'élément d'alerte est activé un temps prédéfini avant la fin de la deuxième étape de mesure. L'élément d'alerte activé indique à l'utilisateur 1 au moyen d'un signal qu'une action est à réaliser sur l'aliment de sorte à obtenir le niveau de cuisson « saignant ». Dans le cas présent, l'action à réaliser est le retournement l'aliment à cuire sur la plaque de cuisson.

Ensuite, le dispositif d'alerte effectue une troisième étape de mesure jusqu'à la fin de la durée de cuisson de la première face correspondant au niveau de cuisson suivant, c'est-à-dire « à point ». La troisième étape de mesure terminée, l'élément d'alerte est alors activé. De manière alternative, l'élément d'alerte est activé un temps prédéfini avant la fin de la troisième étape de mesure. L'élément d'alerte activé indique à l'utilisateur 1 au moyen d'un signal qu'une action est à réaliser sur l'aliment de sorte à obtenir le niveau de cuisson « à point ».

Le dispositif d'alerte recommence l'étape de mesure et de signalisation pour chaque durée de cuisson de la première face correspondant à chaque niveau de cuisson.

Ensuite, le dispositif d'alerte effectue une étape de mesure et de signalisation pour chaque durée de cuisson de la deuxième face correspondant à chaque niveau de cuisson indépendamment du moment où l'aliment a été retourné.

A la fin de la dernière étape de mesure et de signalisation correspondant à la durée de cuisson de la deuxième face pour le dernier niveau de cuisson, l'appareil de cuisson 2 arrête le chauffage de l'au moins une plaque de cuisson.

Les étapes du procédé mettent en oeuvre l'appareil de cuisson 2 et le dispositif d'alerte 3 selon l'invention de sorte que l'utilisateur 1 puisse suivre facilement la cuisson de l'aliment et obtenir finalement un aliment cuit suivant le niveau de cuisson souhaité.

Bien entendu, l'invention n'est pas limitée aux modes de réalisation décrits et représentés aux figures annexées. Des modifications restent possibles, notamment du point de vue de la constitution des divers éléments ou par substitution d'équivalents techniques, sans sortir pour autant du domaine de protection de l'invention défini par les revendications. 1 La présente description détaille une application sur un appareil comprenant une seule plaque de cuisson et qui nécessite un retournement des aliments mais la présente invention pourrait s'appliquer à n'importe quel appareil de cuisson nécessitant dont l'aliment nécessiterait une surveillance de la cuisson.

## Revendications

1. Système de cuisson d'un aliment (4) comprenant un appareil de cuisson (2) électrique par contact avec au moins une plaque de cuisson (26), et au moins un dispositif d'alerte (3) à distance, ledit dispositif d'alerte (3) comprenant une batterie, un microcontrôleur muni d'une horloge, un élément d'alerte configuré pour émettre au moins un signal (S1-1, S1-2, S1-3, S1-4) sur une action à réaliser par un utilisateur sur l'appareil de cuisson (2), et un moyen de communication configuré pour recevoir au moins une donnée de l'appareil de cuisson, l'appareil de cuisson comprenant une unité de contrôle (21), et un moyen de communication configuré pour émettre une donnée vers le moyen de communication du dispositif d'alerte (3), , **caractérisé en ce que** le système de cuisson est configuré pour mettre en oeuvre un procédé de cuisson d'un aliment (4), comprenant :
- Une étape de caractérisation (E1-1) de l'aliment à cuire dans laquelle l'unité de contrôle de l'appareil de cuisson (2) reçoit au moins un type et une caractéristique physique de l'aliment ;
- Une étape d'estimation (E2-1) d'au moins un paramètre de cuisson dans laquelle l'unité de contrôle estime au moins un paramètre de cuisson;
- une étape d'établissement d'une communication entre l'appareil de cuisson et le dispositif d'alerte (3) ;
- Une étape de transmission (E3-1, E3-2, E3-3) dans laquelle le moyen de communication de l'appareil de cuisson (2) transmet au moyen de communication du dispositif d'alerte (3) au moins les données correspondantes à l'au moins un paramètre de cuisson et des données relatives au moment où l'aliment à cuire a été mis en contact avec la plaque de cuisson de sorte à paramétrer le dispositif d'alerte (3) ;
- Une étape d'interruption de la communication entre l'appareil de cuisson (2) et le dispositif d'alerte (3) ;
- Une étape de mesure (E5-1, E5-2, E5-3, E5-4) d'une valeur de durée par le dispositif d'alerte (3), cette valeur de durée étant déterminée et comptabilisée à partir des données transmises au cours de l'étape de transmission ;
- Une étape de signalisation par l'émission d'un signal (S1-1, S1-2, S1-3, S1-4) par l'élément d'alerte du dispositif d'alerte.

2. Système selon la revendication 1 ,dans lequel le dispositif d'alerte (3) comprend un moyen de fixation configuré pour fixer de manière amovible le dispositif d'alerte (3) à une zone d'attache d'une face de l'appareil de cuisson (2).

3. Système selon l'une des revendications 1 ou 2, dans lequel le moyen de communication de l'appareil de cuisson (2) émet au moins une donnée vers le moyen de communication du dispositif d'alerte (3) en utilisant une technologie choisie parmi : Bluetooth, lifi, infrarouge et radio fréquence, par exemple NFC.

4. Système selon la revendication 2 ou les revendications 2 et 3, dans lequel le moyen de fixation est choisi parmi : un aimant, un logement, et un clip.

5. Système selon l'une quelconque des revendications précédentes, dans lequel le signal (S1-1, S1-2, S1-3, S1-4) émis par l'élément d'alerte est choisi parmi : un signal visuel, un signal sonore, et un signal haptique.

6. Système selon l'une des revendications 1 à 5, dans lequel :
- au cours de l'étape d'estimation (E2-1) d'au moins un paramètre de cuisson, l'unité de contrôle estime l'au moins un paramètre de cuisson correspondant à au moins une durée de cuisson d'une première face et au moins une durée de cuisson d'une deuxième face de l'aliment à cuire,
- au cours de l'étape de transmission, le moyen de communication de l'appareil de cuisson (2) transmet au moyen de communication du dispositif d'alerte (3) au moins les données correspondantes à l'au moins une durée de cuisson de la première face et à l'au moins une durée de cuisson de la deuxième face,
- au cours de l'étape de signalisation, un signal (S1-1, S1-2, S1-3, S1-4) est émis par l'élément d'alerte du dispositif d'alerte lorsqu'une valeur de durée mesurée correspond à la durée de l'au moins une durée de cuisson de la première face puis à la durée de l'au moins une durée de cuisson de la deuxième face.

7. Système selon l'une des revendications 1 à 6, dans lequel le type de l'aliment à cuire est reçu d'un dispositif de type (23) agencé pour déterminer automatiquement le type de l'aliment à cuire ou d'un dispositif de sélection de type (24) agencé pour permettre une sélection du type de l'aliment à cuire dans une liste d'aliment, et/ou la caractéristique physique de l'aliment à cuire est reçue d'un dispositif de caractérisation (25) agencé pour déterminer automatiquement au moins une caractéristique physique de l'aliment à cuire ou d'un dispositif d'indication (22) agencé pour permettre à un utilisateur d'indiquer au moins une caractéristique physique de l'aliment à cuire.

8. Système selon l'une quelconque des revendications 1 à 7, dans lequel le procédé de cuisson comprend une étape de réalisation d'une action (E4-1, E4-2, E4-3) dans laquelle l'unité de contrôle reçoit une information sur une réalisation d'une action sur l'appareil de cuisson.

9. Système selon la revendication 7 dans sa dépendance avec la revendication 5, dans lequel le procédé de cuisson comprend une étape ultérieure de transmission dans laquelle le moyen de communication de l'appareil de cuisson (2) transmet à l'au moins un moyen de communication du dispositif d'alerte (3) une mise à jour d'au moins les données correspondantes l'au moins une durée de cuisson de la deuxième face en fonction du moment où une action de retournement de l'aliment à cuire a été réalisé par l'utilisateur à la suite de l'étape de signalisation par l'émission d'un signal par l'élément d'alerte du dispositif d'alerte, lorsqu'une valeur de durée mesurée correspond à la durée de l'au moins une durée de cuisson de la première face.

10. Système selon l'une quelconque des revendications 1 à 9, dans lequel le procédé de cuisson comprend une étape d'indication dans laquelle l'unité de contrôle de l'appareil de cuisson (2) reçoit au moins un niveau de cuisson souhaité et/ou un aspect final souhaité.

11. Système selon l'une quelconque des revendications 1 à 10, dans lequel l'unité de contrôle estime l'au moins une durée de cuisson de la première face et l'au moins une durée de cuisson de la deuxième face en mettant en oeuvre un algorithme de cuisson prédéterminé recevant en entrée au moins le type et la caractéristique physique de l'aliment à cuire.

12. Système selon l'une quelconque des revendications 1 à 11, dans lequel le procédé de cuisson comprend également une étape de préchauffage (A1) dans laquelle l'appareil de cuisson (2) chauffe l'au moins une plaque de cuisson à une température de préchauffage et une étape de cuisson (A2, A3) dans laquelle l'appareil de cuisson (2) chauffe l'au moins une plaque de cuisson à une température de consigne de cuisson déterminée en fonction du type de l'aliment à cuire.

## Patentansprüche

1. Kochsystem für Lebensmittel (4), das ein elektrisches Gerät zum Kochen (2) durch Kontakt mit mindestens einer Kochplatte (26) und mindestens eine Fernalarmvorrichtung (3) umfasst, wobei die Alarmvorrichtung (3) eine Batterie, einen Mikrocontroller, der mit einer Uhr ausgestattet ist, ein Alarmelement, das dazu konfiguriert ist, mindestens ein Signal (S1-1, S1-2, S1-3, S1-4) über eine von einem Benutzer an dem Kochgerät (2) auszuführende Handlung auszusenden, und ein Kommunikationsmittel umfasst, das dazu konfiguriert ist, mindestens eine Dateneinheit vom Kochgerät zu empfangen,
wobei das Kochgerät eine Steuereinheit (21) und ein Kommunikationsmittel umfasst, das dazu konfiguriert ist, eine Dateneinheit an das Kommunikationsmittel der Warnvorrichtung (3) auszusenden,
**dadurch gekennzeichnet, dass** das Kochsystem dazu konfiguriert ist, ein Kochverfahren für ein Lebensmittel (4) durchzuführen, das Folgendes umfasst:
- einen Schritt des Charakterisierens (E1-1) des zu kochenden Lebensmittels, bei dem die Steuereinheit des Kochgeräts (2) mindestens eine Art und eine physikalische Charakteristik des Lebensmittels empfängt;
- einen Schritt des Schätzens (E2-1) mindestens eines Kochparameters, bei dem die Steuereinheit mindestens einen Kochparameter schätzt;
- einen Schritt des Herstellens einer Kommunikation zwischen dem Kochgerät und der Alarmvorrichtung (3);
- einen Schritt des Übertragens (E3-1, E3-2, E3-3), bei dem das Kommunikationsmittel des Kochgeräts (2) an das Kommunikationsmittel der Alarmvorrichtung (3) mindestens die Dateneinheiten, die dem mindestens einen Kochparameter entsprechen, und Dateneinheiten hinsichtlich des Zeitpunkts überträgt, zu dem das zu kochende Lebensmittel mit der Kochplatte in Kontakt gekommen ist, um die Alarmvorrichtung (3) einzurichten;
- einen Schritt des Unterbrechens der Kommunikation zwischen dem Kochgerät (2) und der Alarmvorrichtung (3);
- einen Schritt des Messens (E5-1, E5-2, E5-3, E5-4) eines Werts einer Dauer durch die Alarmvorrichtung (3), wobei der Wert der Dauer anhand der während des Schritts des Übertragens übertragenen Dateneinheiten bestimmt und berechnet wird;
- einen Schritt des Signalisierens durch Aussenden eines Signals (S1-1, S1-2, S1-3, S1-4) durch das Alarmelement der Alarmvorrichtung.

2. System nach Anspruch 1, wobei die Alarmvorrichtung (3) ein Befestigungsmittel umfasst, das dazu konfiguriert ist, die Alarmvorrichtung (3) an einem Befestigungsbereich an einer Seite des Kochgeräts (2) lösbar zu befestigen.

3. System nach einem der Ansprüche 1 oder 2, wobei das Kommunikationsmittel des Kochgeräts (2) mindestens eine Dateneinheit an das Kommunikationsmittel der Alarmvorrichtung (3) aussendet, indem eine Technologie verwendet wird, die aus Folgendem ausgewählt wird: Bluetooth, Li-Fi, Infrarot- und Funkfrequenzen, wie zum Beispiel NFC.

4. System nach Anspruch 2 oder den Ansprüchen 2 und 3, wobei das Befestigungsmittel aus Folgendem ausgewählt wird: einem Magneten, einer Vertiefung und einer Klammer.

5. System nach einem der vorhergehenden Ansprüche, wobei das vom Alarmelement ausgesendete Signal (S1-1, S1-2, S1-3, S1-4) aus Folgendem ausgewählt wird: einem visuellen Signal, einem akustischen Signal und einem haptischen Signal.

6. System nach einem der Ansprüche 1 bis 5, wobei
- während des Schritts des Schätzens (E2-1) mindestens eines Kochparameters die Steuereinheit mindestens einen Kochparameter schätzt, der mindestens einer Kochdauer für eine erste Seite und mindestens einer Kochzeit für eine zweite Seite des zu kochenden Lebensmittels entspricht,
- während des Schritts des Übertragens das Kommunikationsmittel des Kochgeräts (2) an das Kommunikationsmittel der Alarmvorrichtung (3) mindestens die Dateneinheiten überträgt, die der mindestens einen Kochzeit für die erste Seite und der mindestens einen Kochzeit für die zweite Seite entsprechen,
- während des Schritts des Signalisierens ein Signal (S1-1, S1-2, S1-3, S1-4) durch das Alarmelement der Alarmvorrichtung ausgesendet wird, wenn ein gemessener Wert einer Dauer der Dauer der mindestens einen Kochdauer für die erste Seite und dann der Dauer der mindestens einen Kochdauer für die zweite Seite entspricht.

7. System nach einem der Ansprüche 1 bis 6, wobei die Art des zu kochenden Lebensmittels von einer Artenvorrichtung (23), die dazu angeordnet ist, automatisch die Art des zu kochenden Lebensmittels zu bestimmen, oder von einer Artenauswahlvorrichtung (24) empfangen wird, die dazu angeordnet ist, eine Auswahl der Art des zu kochenden Lebensmittels aus einer Liste von Lebensmitteln zu ermöglichen, und/oder die physikalische Charakteristik des zu kochenden Lebensmittels von einer Charakterisierungsvorrichtung (25), die dazu angeordnet ist, mindestens eine physikalische Charakteristik des zu kochenden Lebensmittels automatisch zu bestimmen, oder von einer Anzeigevorrichtung (22) empfangen wird, die dazu angeordnet ist, es zu ermöglichen, einem Benutzer mindestens eine physikalische Charakteristik des zu kochenden Lebensmittels anzuzeigen.

8. System nach einem der Ansprüche 1 bis 7, wobei das Kochverfahren einen Schritt des Ausführens einer Handlung (E4-1, E4-2, E4-3) umfasst, bei dem die Steuereinheit eine Information über ein Ausführen einer Handlung am Kochgerät empfängt.

9. System nach Anspruch 7 in Abhängigkeit von Anspruch 5, wobei das Kochverfahren einen nachfolgenden Schritt des Übertragens, bei dem das Kommunikationsmittel des Kochgeräts (2) an das mindestens eine Kommunikationsmittel der Alarmvorrichtung (3) eine Aktualisierung der Dateneinheiten, die der mindestens einen Kochdauer für die zweite Seite entsprechen, in Abhängigkeit von dem Zeitpunkt überträgt, zu dem eine Handlung des Wendens des zu kochenden Lebensmittels durch den Benutzer ausgeführt wurde, anschließend an den Schritt des Signalisierens durch das Aussenden eines Signals durch das Warnelement der Warnvorrichtung umfasst, wenn ein gemessener Wert einer Dauer der Dauer der mindestens einen Kochdauer für die erste Seite entspricht.

10. System nach einem der Ansprüche 1 bis 9, wobei das Kochverfahren einen Schritt des Anzeigens umfasst, bei dem die Steuereinheit des Kochgeräts (2) mindestens eine gewünschte Kochstufe und/oder ein gewünschtes endgültiges Erscheinungsbild empfängt.

11. System nach einem der Ansprüche 1 bis 10, wobei die Steuereinheit die mindestens eine Kochdauer für die erste Seite und die mindestens eine Kochdauer für die zweite Seite schätzt, indem sie einen vorbestimmten Kochalgorithmus durchführt, der als Eingabe mindestens die Art und die physikalische Charakteristik des zu kochenden Lebensmittels empfängt.

12. System nach einem der Ansprüche 1 bis 11, wobei das Kochverfahren außerdem einen Schritt des Vorheizens (A1), bei dem das Kochgerät (2) die mindestens eine Kochplatte auf eine Vorheiztemperatur erhitzt, und einen Schritt des Kochens (A2, A3) umfasst, bei dem das Kochgerät (2) die mindestens eine Kochplatte auf eine Kochsolltemperatur erhitzt, die in Abhängigkeit von der Art des zu kochenden Lebensmittels bestimmt wird.

## Claims

1. A system for cooking a food (4) comprising an electric cooking appliance (2) by contact with at least one cooking plate (26), and at least one remote alert device (3), said alert device (3) comprising a battery, a microcontroller provided with a clock, an alert element configured to emit at least one signal (S1-1, S1-2, S1-3, S1-4) on an action to be carried out by a user on the cooking appliance (2), and a communication means configured to receive at least one data from the cooking appliance,
the cooking appliance comprising a control unit (21), and a communication means configured to emit data to the communication means of the alert device (3),
**characterized in that** the cooking system is configured to implement a method for cooking a food (4), comprising:
- A step of characterizing (E1-1) the food to be cooked in which the control unit of the cooking appliance (2) receives at least one type and one physical characteristic of the food;
- A step of estimating (E2-1) at least one cooking parameter in which the control unit estimates at least one cooking parameter;
- a step of establishing a communication between the cooking appliance and the alert device (3);
- A transmission step (E3-1, E3-2, E3-3) in which the communication means of the cooking appliance (2) transmits to the communication means of the alert device (3) at least the data corresponding to the at least one cooking parameter and data relating to the time when the food to be cooked was brought into contact with the cooking plate so as to parameterize the alert device (3);
- A step of interrupting the communication between the cooking appliance (2) and the alert device (3);
- A step of measuring (E5-1, E5-2, E5-3, E5-4) a duration value by the alert device (3), this duration value being determined and counted from the data transmitted during the transmission step;
- A step of signaling by emitting a signal (S1-1, S1-2, S1-3, S1-4) by the alert element of the alert device.

2. The system according to claim 1, wherein the alert device (3) comprises a fastening means configured to removably fasten the alert device (3) to an attachment area of a side of the cooking appliance (2).

3. The system according to any of claims 1 or 2, wherein the communication means of the cooking appliance (2) emits at least one data to the communication means of the alert device (3) using a technology selected from: Bluetooth, lifi, infrared and radio frequency, for example NFC.

4. The system according to claim 2 or claims 2 and 3, wherein the fastening means is selected from: a magnet, a housing, and a clip.

5. The system according to any one of the preceding claims, wherein the signal (S1-1, S1-2, S1-3, S1-4) emitted by the alert element is selected from: a visual signal, a sound signal, and a haptic signal.

6. The system according to any of claims 1 to 5, wherein:
- during the step of estimating (E2-1) at least one cooking parameter, the control unit estimates the at least one cooking parameter corresponding to at least one cooking duration of a first side and at least one cooking duration of a second side of the food to be cooked,
- during the transmission step, the communication means of the cooking appliance (2) transmits to the communication means of the alert device (3) at least the data corresponding to the at least one cooking duration of the first side and to the at least one cooking duration of the second side,
- during the signaling step, a signal (S1-1, S1-2, S1-3, S1-4) is emitted by the alert element of the alert device when a measured duration value corresponds to the duration of the at least one cooking duration of the first side then to the duration of the at least one cooking duration of the second side.

7. The system according to any of claims 1 to 6, wherein the type of the food to be cooked is received from a type device (23) arranged to automatically determine the type of the food to be cooked or from a type selection device (24) arranged to enable a selection of the type of the food to be cooked in a food list, and/or the physical characteristic of the food to be cooked is received from a characterization device (25) arranged to automatically determine at least one physical characteristic of the food to be cooked or from an indication device (22) arranged to allow a user to indicate at least one physical characteristic of the food to be cooked.

8. The system according to any one of claims 1 to 7, wherein the cooking method comprises a step of performing an action (E4-1, E4-2, E4-3) in which the control unit receives an information on the performance of an action on the cooking appliance.

9. The system according to claim 7 in its dependence on claim 5, wherein the cooking method comprises a subsequent transmission step in which the communication means of the cooking appliance (2) transmits to the at least one communication means of the alert device (3) an update of at least the data corresponding to the at least one cooking duration of the second side as a function of the time when an action of turning the food to be cooked has been performed by the user following the step of signaling by emitting a signal by the alert element of the alert device, when a measured duration value corresponds to the duration of the at least one cooking duration of the first side.

10. The system according to any one of claims 1 to 9, wherein the cooking method comprises an indication step in which the control unit of the cooking appliance (2) receives at least one desired cooking level and/or one desired final appearance.

11. The system according to any one of claims 1 to 10, wherein the control unit estimates the at least one cooking duration of the first side and the at least one cooking duration of the second side by implementing a predetermined cooking algorithm receiving as input at least the type and the physical characteristic of the food to be cooked.

12. The system according to any one of claims 1 to 11, wherein the cooking method also comprises a preheating step (A1) in which the cooking appliance (2) heats the at least one cooking plate to a preheating temperature and a cooking step (A2, A3) in which the cooking appliance (2) heats the at least one cooking plate to a cooking set temperature determined according to the type of food to be cooked.
